# EUROPÄISCHE PATENTANMELDUNG

(11) **EP 4 796 246 A1**
(43) Veröffentlichungstag der Anmeldung: **26.08.2026**
(21) Anmeldenummer: 26157539.3
(22) Anmeldetag: 10.02.2026
(51) Int. Cl.: B23B 3/06, B23Q 1/01, B23P 15/00

(54) **VERFAHREN ZUR HERSTELLUNG EINES MASCHINENBETTS FÜR EINE DREHMASCHINE**

(30) Priorität: 25.02.2025 DE 102025107056
(71) Anmelder: GDW Werkzeugmaschinen GmbH, 91315 Höchstadt a. d. Aisch (DE)
(72) Erfinder: Ort, Johann Georg, 91413 Neustadt/Aisch (DE)
(74) Vertreter: Dr. Gassner & Partner mbB

(57) **Zusammenfassung**

Die Erfindung betrifft ein Verfahren zur Herstellung eines Maschinenbetts für eine Drehmaschine mit folgenden Schritten:
a) Herstellen eines langgestreckten Maschinenbettgrundkörpers (1) aus Gusseisen, wobei der Maschinenbettgrundkörper (1) eine Unterseite zum Abstützen auf einem Boden und eine gegenüberliegende Oberseite aufweist, wobei an der Oberseite im quer zur Längserstreckungsrichtung verlaufenden Querschnitt zwei einander gegenüberliegenden Schenkel, nämlich ein erster (2) und ein zweiter Schenkel (3), vorgesehen sind,
b) Herstellen von Bohrungen (4, 5) in einer ersten (6) und einer zweiten Schenkel-Oberseite (12), wobei die Bohrungen (4, 5) etwa senkrecht zur ersten (6) und zweiten Schenkel-Oberseite (12) orientiert sind,
c) Bearbeiten der ersten Schenkel-Oberseite (6) des ersten Schenkels (2) und der zweiten Schenkel-Oberseite (12) des zweiten Schenkels (3), so dass jeweils ebene Schenkel-Oberseiten (6, 12) gebildet werden,
d) Bereitstellen einer ersten Führungsschiene (9) und/oder einer zweiten Führungsschiene (15),
e) Befestigen der ersten Führungsschiene (9) mittels in die ersten Bohrungen (4) geführter erster Gewindebolzen (10) und Befestigen der zweiten Führungsschiene (15) mittels in die zweiten Bohrungen (5) geführter zweiter Gewindebolzen (16),
f) Oberflächenhärten der ersten (9) und zweiten Führungsschienen (15) im am Maschinenbettgrundkörper (1) befestigten Zustand.

## Beschreibung

Konventionelle Drehmaschinen umfassen ein Maschinenbett, welches üblicherweise in einem Stück aus Gusseisen hergestellt ist. Es weist eine Maschinenbettunterseite auf, mit dem das Maschinenbett auf einem Boden abgestützt ist. An einer gegenüberliegenden Maschinenbett-Oberseite ist ein langgestrecktes Führungsprofil mit Gleitflächen vorgesehen. Bei den Gleitflächen kann es sich um Prismenflächen, Flachbahnen und/oder Untergriffflächen handeln. Die Gleitflächen dienen der gleitenden Führung eines Hauptschlittens in einer Richtung parallel zur Längserstreckungsrichtung des Maschinenbetts, der sogenannten Z-Richtung.

Insbesondere bei konventionellen Drehmaschinen ist die Maschinenbett-Oberseite im quer zur Längserstreckungsrichtung verlaufenden Querschnitt zumindest abschnittsweise als etwa U-förmiges Profil ausgebildet. Das U-förmige Profil weist zwei einander gegenüberliegende Schenkel, nämlich einen ersten und einen zweiten Schenkel, auf. Die beiden Schenkel weisen an ihrer Oberseite wiederum Führungsprofile mit Gleitflächen auf. Eine erstes Führungsprofil weist zwei Führungsbahnen auf. Eine erste Führungsbahn ist vorzugsweise als Prismenprofil ausgebildet und dient der gleitenden Führung des Hauptschlittens. Eine zweite Führungsbahn ist als Flachbahn ausgebildet und dient der gleitenden Führung eines Reitstocks. Beim zweiten Führungsprofil sind ebenfalls zwei Führungsbahnen vorgesehen, die ebenfalls als Prismenprofil und Flachbahn ausgeführt sind. Das Prismenprofil dient hier zur Führung des Reitstocks und die Flachbahn zur Führung des Hauptschlittens.

Sofern ein Führungsprofil beispielsweise durch Verschleiß, ein herabfallendes Werkzeug oder Werkstück oder dgl. beschädigt wird, ist oft eine einwandfreie Gleitführung des darauf aufgenommenen Hauptschlittens oder des Reitstocks nicht mehr möglich. In diesem Fall muss mit hohem Aufwand das jeweilige Führungsprofil zumindest nachgeschliffen werden.

Aufgabe der Erfindung ist es, die Nachteile nach dem Stand der Technik zu beseitigen. Es soll insbesondere ein Verfahren zur Herstellung eines Maschinenbetts für eine Drehmaschine angegeben werden, dessen Führungsschienen im Falle einer Beschädigung einfach und kostengünstig wiederherstellbar sind.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Nach Maßgabe der Erfindung ist ein Verfahren zur Herstellung eines Maschinenbetts für eine Drehmaschine mit folgenden Schritten vorgesehen:
a) Herstellen eines langgestreckten Maschinenbettgrundkörpers aus Gusseisen, wobei der Maschinenbettgrundkörper eine Unterseite zum Abstützen auf einem Boden und eine gegenüberliegende Oberseite aufweist, wobei an der Oberseite im quer zur Längserstreckungsrichtung verlaufenden Querschnitt zwei einander gegenüberliegende Schenkel, nämlich ein erster und ein zweiter Schenkel, vorgesehen sind,
b) Herstellen von Bohrungen in einer ersten und einer zweiten Schenkel-Oberseite, wobei die Bohrungen etwa senkrecht zur ersten und zweiten Schenkel-Oberseite orientiert sind,
c) Bearbeiten der ersten Schenkel-Oberseite des ersten Schenkels und der zweiten Schenkel-Oberseite des zweiten Schenkels, so dass jeweils ebene Schenkel-Oberseiten gebildet werden,
d) Bereitstellen einer ersten und einer zweiten Führungsschiene,
e) Befestigen der ersten Führungsschiene mittels in die ersten Bohrungen geführter erster Gewindebolzen und Befestigen der zweiten Führungsschiene mittels in die zweiten Bohrungen geführter zweiter Gewindebolzen,
f) Oberflächenhärten der ersten und der zweiten Führungsschienen im am Maschinenbettgrundkörper befestigten Zustand.

Das vorgeschlagene Verfahren ermöglicht auf relativ einfache Weise die Herstellung eines Maschinenbetts, vorzugsweise aus Gusseisen, mit zumindest einer lösbar daran angebrachten Führungsschiene. Indem die Führungsschiene erst nach dem Befestigen am Maschinenbettgrundkörper oberflächlich, vorzugsweise induktiv, gehärtet wird, kann eine hohe Maßhaltigkeit der Führungsschiene erreicht werden. Ferner ist es möglich, an ein- und demselben Maschinenbettgrundkörper - je nach Anforderung - unterschiedlich ausgestaltete Führungsschienen anzubringen. Im Falle einer Beschädigung einer Führungsschiene kann diese relativ schnell und einfach ausgetauscht werden.

Nach einer vorteilhaften Ausgestaltung werden die ebenen Schenkel-Oberseiten so bearbeitet, dass sie sich in einer gemeinsamen Ebene befinden. Die Bearbeitung der Schenkel-Oberseiten kann beispielsweise mittels Fräsen, Schleifen oder dgl. durchgeführt werden.

Nach einer weiteren vorteilhaften Ausgestaltung werden in der ersten und/oder der zweiten Schenkel-Oberseite parallel zu deren Längserstreckungsrichtung verlaufende erste Nuten hergestellt. Die ersten Nuten können beispielsweise mittels Fräsen hergestellt werden.

An den Unterseiten der ersten und zweiten Führungsschienen sind jeweils zu den ersten Nuten korrespondierende zweite Nuten vorgesehen. Die ersten und die zweiten Nuten weisen im Querschnitt zweckmäßigerweise identische Nennmaße auf.

Die erste und zweite Führungsschiene können jeweils aus, vorzugsweise induktiv härtbarem, Gusseisen oder Stahl hergestellt sein. Die vorgeschlagenen Materialien lassen sich relativ einfach mittels spanabhebender Verfahren oder mittels Schleifen bearbeiten.

Nach einer weiteren vorteilhaften Ausgestaltung sind der erste Schenkel und der zweite Schenkel zumindest abschnittsweise Bestandteil eines U-förmigen Profils, wobei im ersten Schenkel erste Ausnehmungen und/oder im zweiten Schenkel zweite Ausnehmungen vorgesehen sind, welche sich jeweils von einer Außenseite des U-förmigen Profils her zu einer Innenseite der U-förmigen Profils erstrecken. Die Innenseiten des U-förmigen Profils liegen einander gegenüber. Die Ausnehmungen können insbesondere als Taschen ausgebildet sein. Vorteilhafterweise erstrecken sich die ersten Bohrungen von der ersten Schenkel-Oberseite bis in die ersten Ausnehmungen und die zweiten Bohrungen erstrecken sich von der zweiten Schenkel-Oberseite bis in die zweiten Ausnehmungen.

Sofern in den Schenkel-Oberseiten erste Nuten vorgesehen sind, werden zweckmäßigerweise die ersten und die zweiten Bohrungen mittig in den ersten Nuten hergestellt.

Vorteilhafterweise werden die ersten und zweiten Gewindebolzen mittels in den Ausnehmungen angebrachten Muttern befestigt. Die vorgeschlagene Befestigung der Muttern in den Ausnehmungen lässt sich von den jeweiligen Außenseiten des U-förmigen Profils einfach herstellen.

Vorteilhafterweise werden vor dem Befestigen der ersten und zweiten Führungsschienen Passfedern in die ersten Nuten eingelegt, welche im Montagezustand in die zweiten Nuten eingreifen. Durch das Vorsehen der Passfedern kann eine hervorragende Maßhaltigkeit der ersten und zweiten Führungsschienen in Längsrichtung erreicht werden.

Nach einem besonders vorteilhaften Ausgestaltungsmerkmal wird die erste Führungsschiene lediglich an ersten Gleitflächen und die zweite Führungsschiene lediglich an zweiten Gleitflächen gehärtet. Bei den Gleitflächen kann es sich um Prismenflächen, Flachbahnen und/oder Untergriffe handeln. Indem lediglich die Gleitflächen, vorzuzugsweise induktiv, gehärtet werden, kann der Vorgang des Härtens insgesamt vereinfacht und kostengünstig durchgeführt werden.

Nach einer weiteren Ausgestaltung werden die ersten und zweiten Gleitflächen nach dem Härten geschliffen. Damit können etwaige Abweichungen von einem vorgegebenen Nennmaß korrigiert werden. Solche Abweichungen können sich beim Oberflächenhärten, vorzugsweise beim Induktionshärten, ergeben.

Das vorgeschlagene Verfahren findet vorteilhafterweise Anwendung bei der Herstellung einer konventionellen Drehmaschine, welche mit einer zweiten Führungsschiene und einem darauf gleitend geführten Reitstock ausgestattet ist. Es kann sich insoweit um eine Leit- und Zugspindeldrehmaschine handeln.

Nachfolgend wird ein Ausführungsbeispiel der Erfindung anhand der Zeichnungen näher erläutert. Es zeigen:
- Fig. 1: eine teilweise aufgebrochene Seitenansicht eines Maschinenbetts,
- Fig. 2: eine Schnittansicht quer zur Längserstreckungsrichtung gemäß Fig. 1,
- Fig. 3: eine Detailansicht gemäß Fig. 2 und
- Fig. 4: eine Seitenansicht in Z-Richtung auf das Maschinenbett mit darauf aufgenommenem Hauptschlitten und Reitstock.

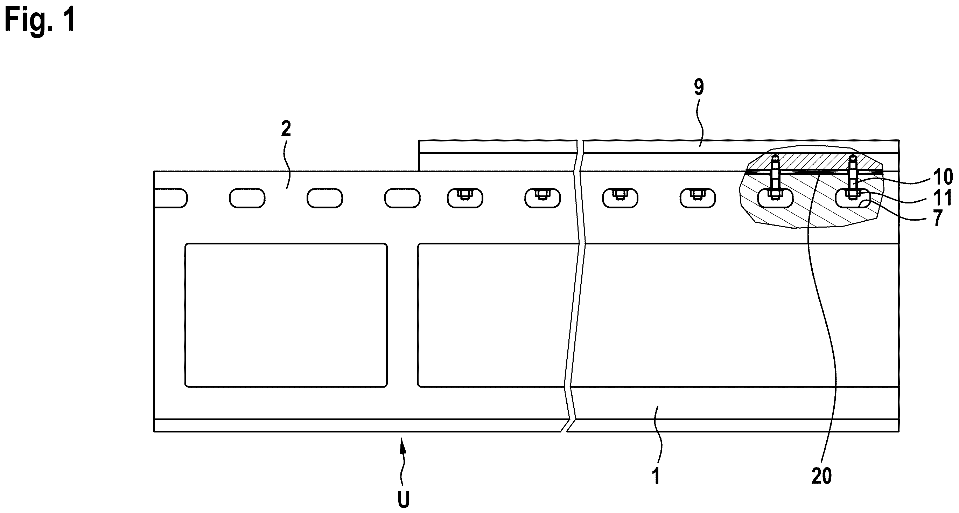

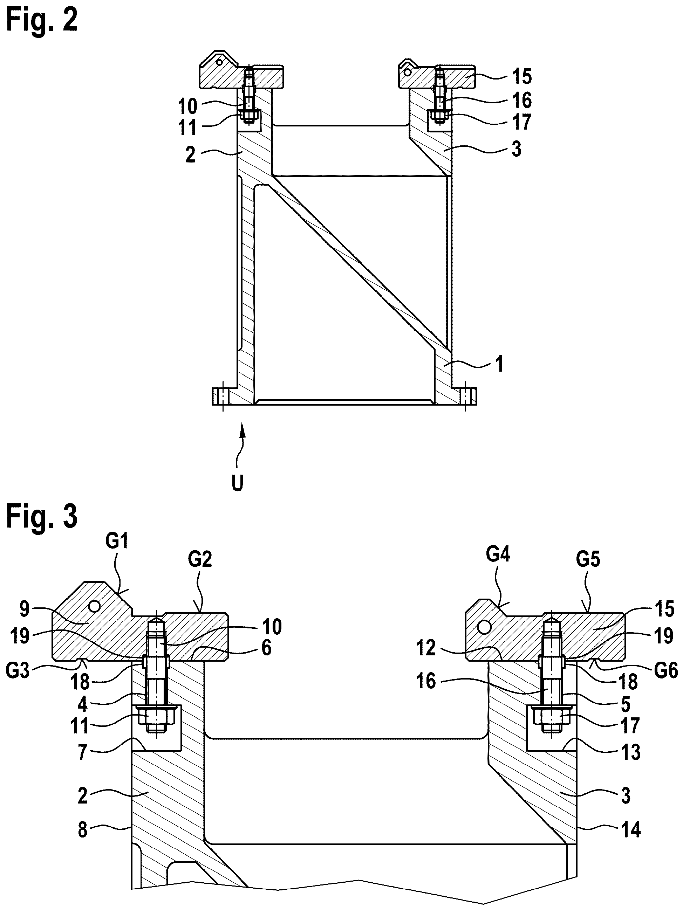

Die Fig. 1 bis 3 zeigen einen langgestreckten Maschinenbettgrundkörper 1, welcher vorzugsweise aus Gusseisen hergestellt ist. Der Maschinenbettgrundkörper 1 ist mit seiner Unterseite U auf einen Boden abgestützt. An einer gegenüberliegenden Oberseite sind im quer zur Längserstreckungs- bzw. Z-Richtung verlaufenden Querschnitt (siehe Fig. 2 und 3) zwei einander gegenüberliegende Schenkel erkennbar, die abschnittsweise Bestandteil eines etwa U-förmigen Profils sind. Ein erster Schenkel ist mit dem Bezugszeichen 2, ein zweiter Schenkel mit dem Bezugszeichen 3 bezeichnet. Im ersten Schenkel 2 befinden sich erste Bohrungen 4, und im zweiten Schenkel 3 befinden sich zweite Bohrungen 5. Die ersten Bohrungen 4 erstrecken sich von einer ersten Schenkel-Oberseite 6 in erste Taschen 7, welche sich zu einer ersten Schenkel-Außenseite 8 hin öffnen. Mit dem Bezugszeichen 9 ist eine erste Führungsschiene bezeichnet, von der sich ein darin aufgenommener erster Gewindebolzen 10 durch die erste Bohrung 4 in die erste Tasche 7 erstreckt. Der erste Gewindebolzen 10 ist mit einer ersten Mutter 11 in der ersten Tasche 7 befestigt.

In analoger Weise erstreckt sich die zweite Bohrung 5 von einer zweiten Schenkel-Oberseite 12 in eine zweite Tasche 13, welche sich zu einer zweiten Schenkel-Außenseite 14 hin öffnet. Mit dem Bezugszeichen 15 ist eine zweite Führungsschiene bezeichnet, von der sich ein zweiter Gewindebolzen 16 in die zweite Tasche 13 erstreckt. Der zweite Gewindebolzen 16 ist in der zweiten Tasche 13 mittels einer zweiten Mutter 17 befestigt.

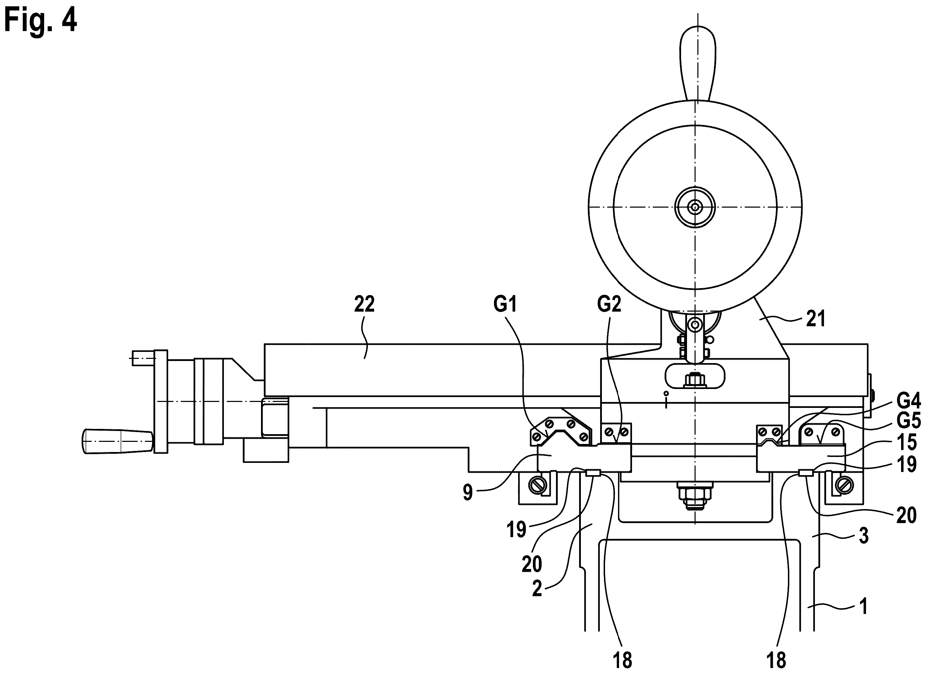

Wie insbesondere aus Fig. 3 ersichtlich ist, sind die ersten Bohrungen 4 und die zweiten Bohrungen 5 jeweils mittig in ersten Nuten 18 angebracht. Die ersten Gewindebolzen 10 und die zweiten Gewindebolzen 16 erstrecken sich ebenfalls mittig durch zweiten Nuten 19. Mit dem Bezugszeichen 20 (siehe Fig. 1 und 4) sind Passfedern bezeichnet, welche sich formschlüssig in die ersten Nuten 18 und die zweiten Nuten 19 erstrecken. Zweckmäßigerweise ist zwischen jeweils zwei in Längserstreckungsrichtung benachbarten Gewindebolzen eine Passfeder in die ersten Nuten 18 und zweiten Nuten 19 eingelegt.

Wie insbesondere aus Fig. 3 ersichtlich ist, weist die erste Führungsschiene 9 erste Gleitflächen G1, G2 und G3 auf. Die Gleitflächen G1 sind als erste Prismenflächen, die Gleitflächen G2 als erste Flachbahnen und die Gleitflächen G3 als erste Untergriffe ausgeführt. In analoger Weise sind bei der zweiten Führungsschiene 15 zweite Gleitflächen G4, G5 und G6 vorgesehen, welche als zweite Prismenflächen G4, als zweite Flachbahnen G5 und als zweite Untergriffe G6 ausgeführt sind.

Fig. 4 zeigt eine Ansicht quer zur Z-Richtung. Ein Reitstock 21 ist auf den zweiten Prismenflächen G4 der zweite Führungsschiene 15 und der ersten Flachbahn G3 der ersten Führungsschiene 9 geführt. Ein Hauptschlitten bzw. Schlitten 22 ist auf der ersten Prismenfläche G1 sowie dem ersten Untergriff G3 der ersten Führungsschiene 9 geführt. Ferner ist der Schlitten 22 auf der zweiten Flachbahn G5 sowie dem zweiten Untergriff G6 geführt.

Die Herstellung des vorgeschlagenen Maschinenbetts erfolgt, indem zunächst der Maschinenbettgrundkörper 1 in herkömmlicher Weise aus Gusseisen hergestellt wird. Anschließend werden der erste Schenkel 2 an dessen erster Schenkel-Oberseite 6 und der zweite Schenkel 3 an dessen zweiter Schenkel-Oberseite 12 gefräst, und zwar vorzugsweise so, dass sich die Schenkel-Oberseiten 6, 12 sich in einer gemeinsamen Ebene befinden. Ferner wird in die erste Schenkel-Oberseite 6 entlang deren Längserstreckungsrichtung eine erste Nut 18 gefräst. In die zweite Schenkel-Oberseite 12 wird ebenfalls eine erste Nut 18 gefräst. Die ersten Nuten 18 können mittels Schleifen zusätzlich auf ein vorgegebenes Maß gebracht werden. Ferner werden mittig in die ersten Nuten 18 erste Bohrungen 4 und zweite Bohrungen 5 eingebracht, welche sich bis in die ersten Taschen 7 und zweiten Taschen 13 erstrecken. Die ersten Taschen 7 und zweiten Taschen 13 können mittels Fräsen von den Außenseiten 8, 14 des ersten Schenkels 2 und des zweiten Schenkels 3 hergestellt werden.

Anschließend werden Passfedern 20 in die ersten Nuten 18 eingelegt. Zwischen jeweils zwei aufeinanderfolgenden Bohrungen 4, 5 wird jeweils eine Passfeder 20 eingelegt. In der ersten Führungsschiene 9 sind die ersten Gewindebolzen 10 vormontiert, ferner ist eine zur ersten Nut 18 korrespondierende zweite Nut 19 vorgesehen. In der zweiten Führungsschiene 15 sind die zweiten Gewindebolzen 16 vormontiert. Ferner ist in der zweiten Führungsschiene 15 eine zweite Nut 19 vorgesehen, welche zur ersten Nut 18 korrespondiert. Die erste Führungsschiene 9 wird auf dem ersten Schenkel 2 montiert, so dass die ersten Gewindebolzen 10 die ersten Bohrungen 4 durchgreifen und die Passfedern 20 in die zweite Nut 19 formschlüssig eingreifen. Sodann werden die ersten Muttern 11 montiert und angezogen. In analoger Weise wird die zweite Führungsschiene 15 am zweiten Schenkel 3 montiert.

Sodann werden die erste Führungsschiene 9 und/oder die zweite Führungsschiene 15 gleichzeitig oder nacheinander z. B. mit einer geeigneten Induktionshärtevorrichtung gehärtet. Dabei erfolgt insbesondere eine Härtung lediglich an den ersten Gleitflächen G1, G2 und G3 der ersten Führungsschiene 9 und/oder den zweiten Gleitflächen G4, G5 und G6 der zweiten Führungsschiene 15. Der Vorgang des Oberflächenhärtens, vorzugsweise des Induktionshärtens, kann auch in mehreren Durchläufen für die jeweiligen Gleitflächen G1 bis G6 nacheinander durchgeführt werden.

Nach dem Härten der ersten Gleitflächen G1, G2, G3 und/oder der zweiten Gleitflächen G4, G5 und G6 werden die jeweiligen Gleitflächen vorzugsweise entsprechend der vorgegebenen Nennmaße geschliffen.

### Bezugszeichenliste

- 1: Maschinenbettgrundkörper
- 2: erster Schenkel
- 3: zweiter Schenkel
- 4: erste Bohrung
- 5: zweite Bohrung
- 6: erste Schenkel-Oberseite
- 7: erste Tasche
- 8: erste Schenkel-Außenseite
- 9: erste Führungsschiene
- 10: erster Gewindebolzen
- 11: erste Mutter
- 12: zweite Schenkel-Oberseite
- 13: zweite Tasche
- 14: zweite Schenkel-Außenseite
- 15: zweite Führungsschiene
- 16: zweiter Gewindebolzen
- 17: zweite Mutter
- 18: erste Nut
- 19: zweite Nut
- 20: Passfeder
- 21: Reitstock
- 22: Schlitten

- G1, G2, G3: erste Gleitflächen
- G4, G5, G6: zweite Gleitflächen
- U: Unterseite

## Patentansprüche

1. Verfahren zur Herstellung eines Maschinenbetts für eine Drehmaschine mit folgenden Schritten:
a) Herstellen eines langgestreckten Maschinenbettgrundkörpers (1) aus Gusseisen, wobei der Maschinenbettgrundkörper (1) eine Unterseite zum Abstützen auf einem Boden und eine gegenüberliegende Oberseite aufweist, wobei an der Oberseite im quer zur Längserstreckungsrichtung verlaufenden Querschnitt zwei einander gegenüberliegende Schenkel, nämlich ein erster (2) und einem zweiter Schenkel (3), vorgesehen sind,
b) Herstellen von ersten und zweiten Bohrungen (4, 5) in einer ersten Schenkel-Oberseite (6) und einer zweiten Schenkel-Oberseite (12), wobei die Bohrungen (4, 5) etwa senkrecht zur ersten Schenkel-Oberseite (6) und/oder zur zweiten Schenkel-Oberseite (12) orientiert sind,
c) Bearbeiten der ersten Schenkel-Oberseite (6) des ersten Schenkels (2) und der zweiten Schenkel-Oberseite (12) des zweiten Schenkels (3), so dass jeweils ebene Schenkel-Oberseiten (6, 12) gebildet werden,
d) Bereitstellen einer ersten Führungsschiene (9) und einer zweiten Führungsschiene (15),
e) Befestigen der ersten Führungsschiene (9) mittels in die ersten Bohrungen (4) geführter erster Gewindebolzen (10) und Befestigen der zweiten Führungsschiene (15) mittels in die zweiten Bohrungen (5) geführter zweiter Gewindebolzen (16),
f) Oberflächenhärten der ersten Führungsschienen (9) und der zweiten Führungsschienen (15) im am Maschinenbettgrundkörper (1) befestigten Zustand.

2. Verfahren nach Anspruch 1, wobei die ebenen Schenkel-Oberseiten (6, 12) so bearbeitet werden, dass sie sich in einer gemeinsamen Ebene befinden.

3. Verfahren nach Anspruch 1 oder 2, wobei in der ersten Schenkel-Oberseite (6) und der zweiten Schenkel-Oberseite (12) parallel zur deren Längserstreckungsrichtung verlaufende erste Nuten (18) hergestellt werden.

4. Verfahren nach Anspruch 3, wobei an den Unterseiten der ersten Führungsschiene (9) und der zweiten Führungsschiene (12) jeweils zu den ersten Nuten (18) korrespondierende zweite Nuten (19) vorgesehen werden.

5. Verfahren nach einem der vorhergehenden Ansprüche, wobei die erste Führungsschiene (9) und die zweite Führungsschiene (15) jeweils aus induktiv härtbarem Gusseisen oder Stahl hergestellt werden.

6. Verfahren nach einem der vorhergehenden Ansprüche, wobei der erste Schenkel (2) und der zweite Schenkel (3) zumindest abschnittsweise Bestandteil eines U-förmigen Profils sind, wobei im ersten Schenkel (2) erste Ausnehmungen und im zweiten Schenkel (3) zweite Ausnehmungen vorgesehen werden, welche sich jeweils von einer Außenseite (8, 14) des U-förmigen Profils her zu einer Innenseite des U-förmigen Profils erstrecken.

7. Verfahren nach Anspruch 6, wobei die Ausnehmungen als Taschen (7, 13) ausgebildet werden.

8. Verfahren nach Anspruch 6 oder 7, wobei sich die ersten Bohrungen (4) von der ersten Schenkel-Oberseite (6) bis in die ersten Ausnehmungen erstrecken und die zweiten Bohrungen (5) sich von der zweiten Schenkel-Oberseite (12) bis in die zweiten Ausnehmungen erstrecken.

9. Verfahren nach einem der Ansprüche 3 bis 8, wobei die ersten Bohrungen (4) und die zweiten Bohrungen (5) mittig in den ersten Nuten (18) hergestellt werden.

10. Verfahren nach einem der vorhergehenden Ansprüche, wobei die ersten Gewindebolzen (10) und die zweiten Gewindebolzen (16) mittels in den Ausnehmungen angebrachter Muttern (11, 17) befestigt werden.

11. Verfahren nach einem der Ansprüche 3 bis 10, wobei vor dem Befestigen der ersten Führungsschiene (9) und der zweiten Führungsschiene (15) Passfedern (20) in die ersten Nuten (18) eingelegt werden, welche im Montagezustand in die zweiten Nuten (19) formschlüssig eingreifen.

12. Verfahren nach einem der vorhergehenden Ansprüche, wobei die erste Führungsschiene (9) lediglich an ersten Gleitflächen (G1, G2, G3) und die zweite Führungsschiene (15) lediglich an zweiten Gleitflächen (G4, G5, G6) gehärtet wird.

13. Verfahren nach Anspruch 12, wobei die ersten Gleitflächen (G1, G2, G3) und die zweiten Gleitflächen (G4, G5, G6) nach dem Härten geschliffen werden.

14. Konventionelle Drehmaschine mit einem auf der zweiten Führungsschiene gleitend geführten Reitstock (21) und einem Maschinenbett, das nach einem der Ansprüche 1 bis 13 hergestellt ist.

15. Konventionelle Drehmaschine nach Anspruch 14, die als Leit- und Zugspindeldrehmaschine ausgebildet ist.
